# EUROPEAN PATENT SPECIFICATION

(11) **EP 1 404 580 B1**
(45) Date of publication and mention of the grant of the patent: **07.12.2005**
(21) Application number: 02737458.6
(22) Date of filing: 11.06.2002
(51) Int. Cl.: B32B 27/10, B32B 5/18, B65D 81/38

(54) **INSULATED BEVERAGE OR FOOD CONTAINER**
ISOLIERTER GETRÄNKE- ODER LEBENSMITTELBEHÄLTER
RECIPIENT ISOLE POUR BOISSONS OU ALIMENTS

(30) Priority: 18.06.2001 US 298386 P; 08.08.2001 US 923332
(43) Date of publication of application: 07.04.2004
(73) Proprietor: APPLETON PAPERS INC., Appleton, WI 54912-0359 (US)
(72) Inventor: DEBRAAL, John, Charles, Appleton, WI 54915 (US); MACKAY, Lazar, John, Custer, WI 54423 (US)
(74) Representative: James, Anthony Christopher W.P.
(86) International application number: PCT/US2002/018416
(87) International publication number: WO 2002/102671

(56) References cited:
- WO-A-00/71328
- FR-A- 2 217 954
- GB-A- 2 181 412
- US-A- 4 282 984
- US-A- 4 923 557
- US-A- 5 490 631
- US-A- 5 952 068
- PATENT ABSTRACTS OF JAPAN vol. 2000, no. 15, 6 April 2001 (2001-04-06) -& JP 2000 335548 A (TOPPAN PRINTING CO LTD), 5 December 2000 (2000-12-05)

## Description

The present invention relates to insulating containers and container stock material. In particular, the present invention relates to an insulated, paper-based beverage or food container or stock material having improved insulation properties and a method of producing these insulated containers or stock materials.

Current standard paper cup stock permits excessive heat transfer through the wall of an insulated beverage container. Accordingly, a user's hand becomes uncomfortably or sometimes even painfully hot when excessive heat transfer is permitted through the container wall. This may require the user to be inconvenienced by having to release the container due to the excessive heat of the container's contents. Thus, such containers have a low hold time. An analogous but opposite situation can occur with very cold beverages, where heat from a user's hand is transferred rapidly to the contents of the container.

US-A-4435344 describes a method for producing an insulating composite paper container having a body member and a bottom member. The body member is formed of paper coated or laminated with a thermoplastic synthetic resin film. A surface of the body member is then heated to form a foamed polyethylene heat-insulating layer on either or both of the inner and outer surfaces of the container's body member. The heat-insulated body member is then attached to the bottom member.

US-A-6030476 and US-A-5840139 describe a method for producing insulating beverage containers or cups, stock material and containers made therefrom. A stock material includes a base layer, an insulating layer formed on a portion of the base layer, and a printed pattern/mineral oil applied to the insulating layer. The insulating layer is formed using a thermoplastic synthetic resin film. Also, US-A-6030476 describes a polyethylene foam on the outside surface of the paper cup.

EP-A-0940240 describes a heat insulating paper cup with targeted insulation in areas where printed matter exists. The body member of the cup is coated on its outside surface with a foamable synthetic resin and on its inside surface with a synthetic resin laminate to prevent liquid penetration. The bottom panel member is optionally coated on its upper surface with a foamed or an unfoamed synthetic resin. Printed matter is provided prior to foaming of the synthetic resin on the outer surface of the cup with water-based ink. Further, the low density polyethylene is foamed by vaporizing the water contained in the paper stock.

EP-A-1060879 describes a heat insulating paper cup having a body member partially or fully coated on its outside surface with a foamed low density polyethylene and coated on its inside surface with an unfoamed modified low density polyethyelene.

US-A-5952068 describes a heat insulating paper cup having a layer of insulation comprised of void containing particles held together with a binder applied to the outer part of the sidewall. The insulating layer may be bonded to the outside surface of the paper cup stock by means of a polymer tie layer.

JP-A-2000335548 describes a heat insulating paper cup formed from a composite sheet comprising a layer of foamed insulating material sandwiched between two layers of paper. A polyethylene resin protective layer is provided on the inside surface of the cup.

However, the present inventors have determined that the devices and methods of the background art suffer from the following disadvantages. Other designs sacrifice the outside printability of the cup to provide insulation or do not provide adequate insulation properties.

The background art has not yet achieved insulated paper stock that is capable of effectively impeding heat transfer between the contents of the container and the exterior. In addition, adequate thermal insulation is not achieved from the background art in a manner that is cost effective.

The present invention overcomes the shortcomings associated with conventional devices and methods, and achieves other advantages not realized by conventional devices and methods.

It is an object of the present invention to provide an insulated beverage container, sleeve or stock material that reduces the energy transfer through a container wall, and offers increased functionality and usefulness.

It is an object of the present invention to provide a container, sleeve, or stock material having superior hold times and pre-disposed to high quality printing and graphics.

The present invention is a recognition, in part, that the ability to produce blank paper cups, sleeves or stock material that can be printed/graphically enhanced is desirable. This invention permits a superior insulating cup product to be made from standardized manufacturing processes.

In a first aspect, the present invention provides an insulated container comprising: a container wall having an exterior surface and an interior surface; a bottom portion engaging said container wall along a lower side portion thereof; said container wall comprising: a paper stock layer arranged along the exterior surface of said container wall; an extruded or laminated foam layer arranged inside said paper stock layer; and a polymer shrink film layer arranged inside said paper stock layer,said polymer shrink film layer having a percent shrink of from 5 to 30%.

Preferably, the foam layer is sandwiched between said paper stock layer and said polymer shrink film layer, and preferably the polymer shrink film layer forms the innermost surface of said container wall. In certain embodiments, the container wall further comprises an additional polymer film layer inside said paper stock layer, said foam layer being sandwiched between said additional polymer film layer and said polymer shrink film layer.

Suitably, the paper stock layer has a thickness greater than or equal to 254 µm (10 mils) and less than or equal to 660 µm (26 mils).

Suitably, the foam layer is formed from at least one of high density polyethylene, low density polyethylene, linear low density polyethylene, and oriented polypropylene. Suitably, the polymer shrink film layer is a laminated or extruded shrink film polymer formed from at least one of high density polyethylene, low density polyethylene, linear low density polyethylene, and oriented polypropylene.

Suitably, the foam layer is adhered to the paper stock layer by melt extrusion, lamination or foam extrusion.

In a second aspect, the present invention provides an insulated food or beverage container sleeve comprising: a paper stock layer having an interior surface; a laminated or extruded foam layer, said foam layer being disposed along the interior surface of the paper stock layer; and a polymer shrink film layer having a percent shrink of from 5 to 30%, the foam layer being sandwiched between the paper stock layer and the polymer shrink film layer.

Preferably, the sleeve further comprises an additional polymer film layer sandwiched between the paper stock layer and said foam layer.

In a further aspect, the present invention provides an insulated container stock material for making an insulated container or an insulated sleeve according to the present invention, said stock material comprising: a paper stock layer; a laminated or extruded foam layer formed from high density polyethylene, low density polyethylene, linear low density polyethylene, or oriented polypropylene, said foam layer being arranged along a first surface the paper stock layer; and a polymer shrink film layer having a percent shrink of from 5 to 30% and also arranged said first surface of said paper stock layer.

Preferred features of the invention according to this aspect are as described hereinbefore in relation to the first aspect of the invention

In a further aspect, the present invention provides a method of producing an insulated food or beverage container or sleeve, comprising the steps of: providing an insulated container or sleeve having a wall defining an interior space, said wall having arranged along an interior surface thereof a polymer shrink film layer having a percent shrink of from 5 to 30% and a laminated or extruded foam layer; heating the interior surface to shrink the polymer film layer; and removing wrinkles along the foam and polymer shrink film layers during the heating step to thereby prevent a wrinkling effect in the interior space.

Suitably, in the method according to this aspect of the invention, the heating step includes at least one of heating a supply of air for transporting and stacking the food or beverage container, heating a forming mandrel for the food or beverage container, and transporting the food or beverage container through a tunnel heater.

Suitably, the step of providing comprises forming a food or beverage container or sleeve from an insulated container stock material according to the present invention.

Further scope of the applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinafter and the accompanying drawings which are given by way of illustration only, and thus are not limitative of the present invention, and wherein:

FIG. 1 is a side cross-sectional view of an insulated beverage or food container according to the present invention;

FIG. 2 is a cross-sectional view of an insulated beverage container wall or sleeve according to a reference example;

FIG. 3 is a cross-sectional view of an insulated beverage container wall according to a first embodiment of the present invention;

FIG. 4 is a cross-sectional view of an insulated beverage container wall according to a second embodiment of the present invention;

FIG. 5 is a cross-sectional view of an insulated beverage container wall according to a third embodiment of the present invention

FIG. 6 is a cross-sectional view of an insulated beverage container wall according to a reference example;

FIG. 7 is a graphical view of experimental data representing actual and comparative hold times for embodiments of the present invention and commercial available products;

FIG. 8 is a cross sectional view of an insulating beverage container sleeve according to the present invention;

FIG. 9 is a cross-sectional view of an insulated beverage container wall or beverage container sleeve wall according to a fifth embodiment of the present invention;

FIG. 10 is a plan view depicting an interior and exterior of a beverage container or sleeve wall according to the present invention; and

FIG. 11 is a plan view depicting an interior and exterior of a beverage container or sleeve wall according to the present invention.

### DETAILED DESCRIPTION OF THE PREFERRED EMBODIMENTS

The present invention is directed toward an insulated beverage or food container, cup or sleeve; the container stock material; and a method of producing insulated beverage or food containers or stock materials that utilize a polyethylene foam layer extruded or laminated to a surface of a food or beverage paper stock. The present invention is described in greater detail hereinafter with reference to the accompanying drawings.

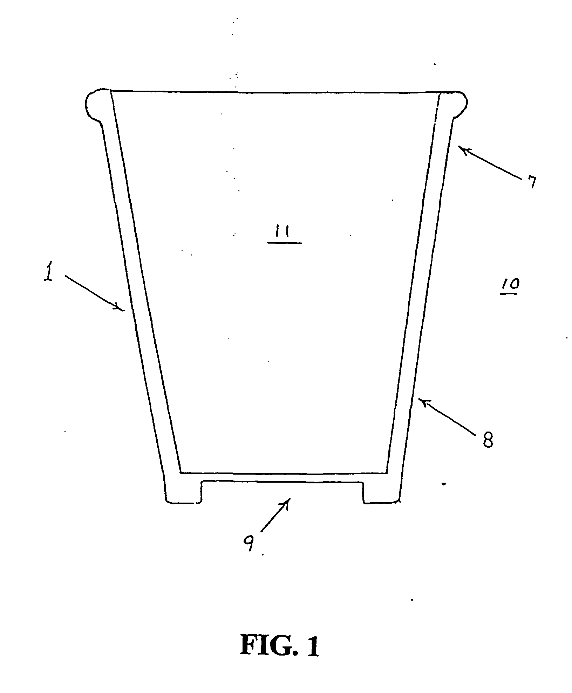

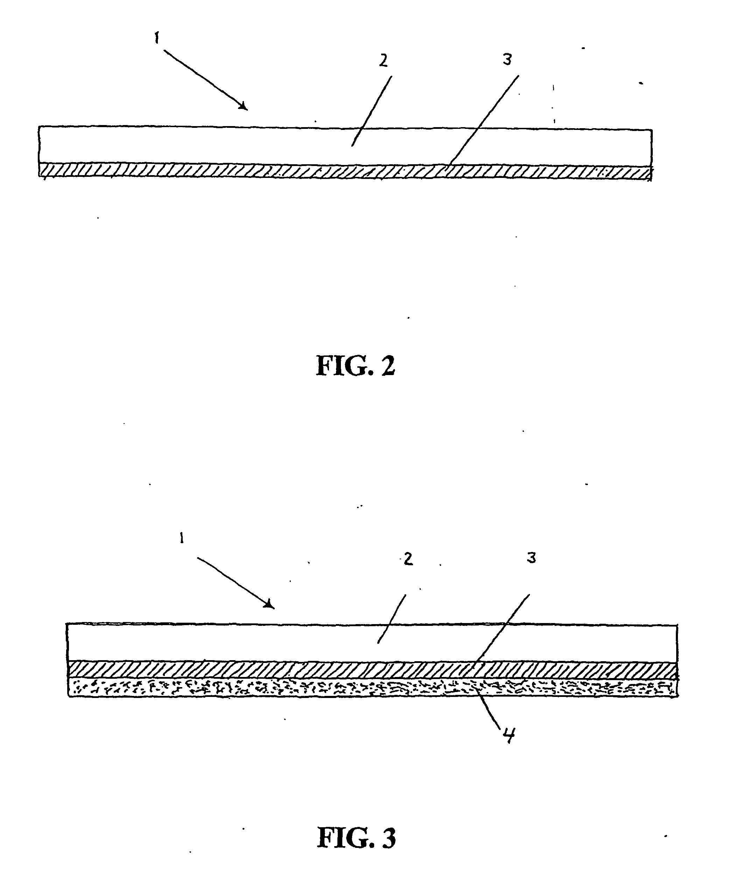

FIGs. 2 through 6 are cross-sectional views of an insulated beverage container wall 11 according to various embodiments. One of skill in the art will appreciate that an insulated container 10 as shown in FIG. 1 can readily incorporate any of the beverage container walls depicted in FIGs. 2 through FIG. 6. While the following description is directed toward a cup, the techniques of this invention can be applied to any number of containers or surfaces, for instance a beverage container, insulating beverage sleeve or stock material can be constructed from any of the embodiments shown in the accompanying drawings.

FIG. 1 is a side cross-sectional view of an insulated beverage container 10 according to the present invention. The insulated beverage container includes a container wall I having an upper side portion 7, a lower side portion 8 and a bottom portion 9. A beverage containing space 11 is formed between the container wall's 1 upper side portion 7, lower side portion 8 and bottom portion 9.

As aforementioned, current standard paper cup stock allows excessive heat to transfer through the wall of the container. This results in a user's hand becoming uncomfortably or sometimes even painfully hot or cold when grasping a hot or cold container. A quantitative measurement of the ability of a paper stock to withstand heat transfer between the beverage containing space and the outermost surface of the container is often referred to as hold time. It will be appreciated that the present invention significantly improves the hold time of paper-based stock beverage containers over the related art.

The present invention utilizes a gas containing film adhered or selectively adhered to the surface of a paper stock. The gas containing film layer provides resistance to heat transfer through the container wall 1. The present invention provides an insulating container construction and a method of producing this construction which reduces the energy transfer through the container wall, providing increased functionality and usefulness.

FIG. 2 is a cross-sectional view of an insulated beverage container wall or sleeve 1. A beverage container wall or sleeve 1 includes a paper stock 2, and an extruded or laminated foam layer 3. The paper stock 2 provides structural rigidity and forms the desired shape of the container 10 or a portion of a sleeve wall. The extruded or laminated foam layer 3 is adhered to an inner surface (e.g., facing the beverage containing space 11) of the paper stock 2 and performs the function of a gas containing film layer. The foam layer 3 is designed to provide thermal insulation properties to the container.

The paper stock 2 is standard paper used for making beverage cups and other food containers. The paper stock 2 may be chosen with a thickness that provides optimized physical characteristics for cup construction. Important physical characteristics include fold strength, stiffness, tear and tensile strength.

A desired paper thickness is chosen such that the resultant thickness of the finished cup wall 1 does not negatively impact converting, handling or finished cup properties. A typical paper stock 2 for beverage and food containers range from 10 to 40 mils in a paper stock 2 thickness, and more particularly from 10 mils to 26 mils in thickness. Where the material is applied to an insulating beverage sleeve, the paper stock 2 may be chosen with a thickness which provides the proper physical characteristics such as strength for constructing a sleeve surrounding a beverage container 10 such as that shown in FIG. 1.

Important physical characteristics include fold strength, stiffness, tear and tensile strength. The paper thickness is chosen such that the resultant thickness of the sleeve and cup wall does not negatively impact handling, distribution or become cumbersome to the end user. Additional criteria affecting paper stock selection includes appearance and cost. A smooth, bleached-white paper may be chosen to enhance the print quality and the appeal of the cup, or a brown kraft stock may be chosen for economy. Applicable paper suitable for sleeve stock ranges from 2 mils to 10 mils for the application to an insulating beverage sleeve.

The extruded or laminated foam layer 3 is applied to the paper stock 2 as an extrusion or lamination. The purpose of the extruded or laminated foam layer 3 is to provide thermal insulation properties, and to contain liquids. The extruded or laminated foam layer 3 can also be used as a barrier to moisture transmission and further aids in seam sealing during container construction. In the case of an insulating beverage sleeve, the foam layer 3 is a gas containing layer that provides resistance to heat transfer through the sleeve wall.

The extruded or laminated foam layer 3, although not limited to, can be formed from any of the following exemplary materials: high density polyethylene (HDPE), low density polyethylene (LDPE), linear low density polyethylene (LLDPE), orientated polypropylene (OPP), etc. HDPE and LDPE are desirable materials. Although not necessary, additional foam polymers may include and/or be formed from PEFSs, LDPEs or HDPEs that are not tensioned or stretched during manufacturing.

Additives may also be included to enhance various material properties or to aid in the manufacturing process. These additives include, but are not limited to, any of the following exemplary additives: ethylene vinyl acetate (EVA), ethylene vinyl alcohol (EVOH), and plasticizers.

The foam layer 3 is attached to the paper stock uniformly during the manufacturing process. The gases trapped within the film of the foam layer 3 impart a high level of thermal insulation to the container wall. An important aspect of the gas containing foam layer 3 is to provide resistance to energy transfer. The amount of trapped gas is variable and depends upon a specified volume that will render the exterior of the container comfortable to hold for an average user. Therefore, the required amount of trapped air will generally vary according to the intended use of the container.

For instance, a container used to serve coffee (normally 88°C (190° F)) will need more resistance to energy flow than a similar container used to serve a relatively cool cup of soup (normally 74°C (165° F)). An additional benefit to the insulating layer is the ability of the container to keep the food or beverage at its serving temperature for a longer period of time.

A foam layer 3 can be either laminated to or extruded onto the paper stock 2. When the foam layer 3 is laminated to the paper stock layer 2, a gas containing film such as CA-20 manufactured by Sealed Air Corporation or another may be used. When the film is extruded onto the paper stock 2 a blowing agent is mixed into the polymer prior to extrusion. The incorporated blowing agent creates gas pockets within the film during the extruding process. The extrusion method offers the additional advantage of creating the product in one operational step.

The insulating foam layer 3 is preferably between 3 and 44 g/m² (2 and 30 lbs/3300 ft²), and more preferably between 7 and 22 g/m² (5 and 15 lbs/ 3300 ft²). The density of the film is preferably between 16 and 48 kg/m³ (1.0 and 3.0 lbs/ft³). The thickness of the insulating gas containing foam layer 3 is preferably between 127 and 762 µm (5 and 30 mils), and more preferably between 254 and 508 µm (10 and 20 mils). The foam layer 3 can be a gas containing film layer formed from a continuous single layer or lamination of films and foam.

### Polymer Shrink Films

FIG. 3 is a cross sectional view of a container wall according to a first embodiment of the present invention. A polymer shrink film layer 4 is extruded, laminated, or coated to the foam containing layer 3, e.g. in a position between the beverage containing space 11 and the foam containing layer 3 in a container 10. The foam layer 3 is therefore interposed between the paper stock 2 and the polymer shrink film layer 4. The polymer shrink film layer 4 will hereinafter be referred to as a PE layer 4. The PE layer 4 can be used as a barrier against moisture transmission and aids in seam sealing during container construction.

In a preferred embodiment, the foam layer 3 is first formed and then it is melt extruded, laminated or melt fused to the surface of the paper stock 2. The residual moisture held within the paper stock 2 which is characteristically relied upon in the related art, is not relied upon as the mechanism for creating the foam layer 3. The foam can also be extruded to the paper stock 2, but in each instance the foaming is created by mixing a blowing agent into the polymer prior to extrusion or foam creation. The incorporated blowing agent creates gas pockets within the film during the extruding process. The extruded method offers the advantage of directly creating the product in one operational step.

The foam layer 3 can also be treated in order to accept or conform with various printing inks. The foam layer 3 can be treated by various means well known in the industry such as, but not limited to: corona treatment, flame treatment, ozone treatment, coatings, etc.

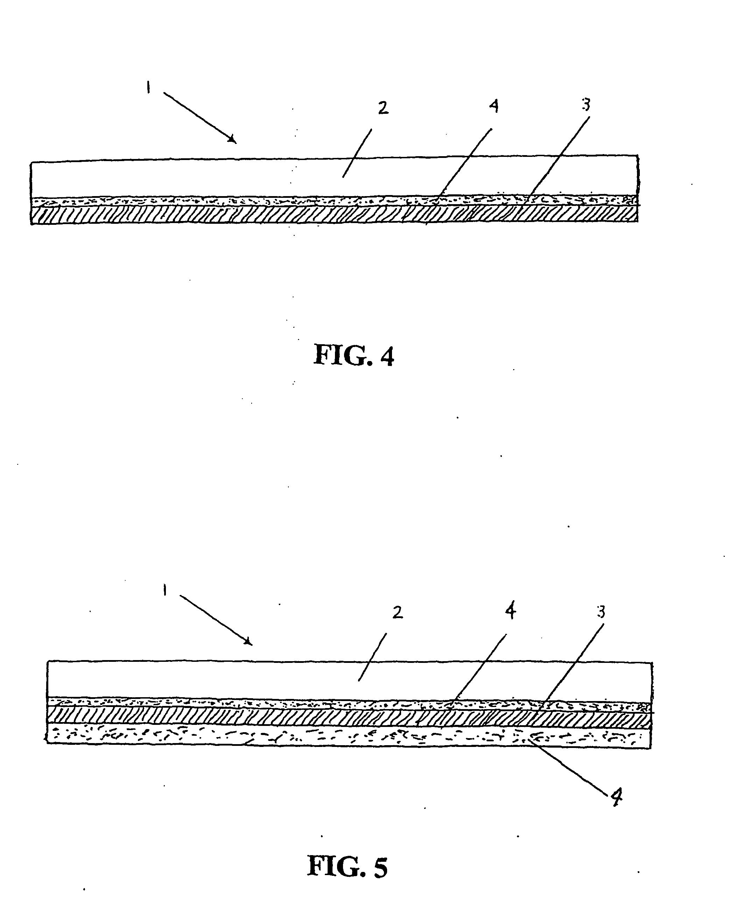

FIG. 4 is a cross sectional view of a container wall according to a second embodiment of the present invention. A PE layer 4 is extruded, laminated, or coated in a position interposed between the foam layer 3 and the paper stock 2. However, PE layer 4 can also be used as a barrier against moisture transmission and aids in seam sealing during container construction. As seen in FIG. 5, the foam layer 3 can also be sandwiched between two PE layers 4, e.g. an innermost PE layer is adhered directly to the paper stock layer 2 in a third embodiment.

The PE layer(s) 4, although not limited to, can be formed from any of the following exemplary materials: high density polyethylene. (HDPE), low density polyethylene (LDPE), linear low density polyethylene (LLDPE), orientated polypropylene (OPP), etc. HDPE and LDPE are desirable materials in. a. preferred embodiment of the present invention. Some additional and applicable shrinkable thermoplastics are PVC, PTEE, FEP, PVDF, PET, LDPE, LLDPE, HDPE and polyolefin, that may be readily incorporated into the claimed invention.

The PE layer(s) 4 can be manufactured to develop a property called shape memory. When the PE layer(s) 4 are subject to axial tension and stretching during manufacture or heated while under tension and then allowed to cool, the PE layer(s) 4 develop shape memory. Shape memory causes the PE layer(s) to shrink, e.g. the polymer molecules relax to their original shape, when reheated. The present inventors have determined that the shape memory of particular PE layer(s) can be used advantageously in conjunction with paper stock materials to produce polymer shrink film layers 4 that reduce and/or eliminate a wrinkling effect discussed in greater detail hereinafter.

Additives may also be included to enhance various material properties or to aid in the manufacturing process. These additives include, but are not limited to, any of the following exemplary additives: ethylene vinyl acetate (EVA), ethylene vinyl alcohol (EVOH), and plasticizers.

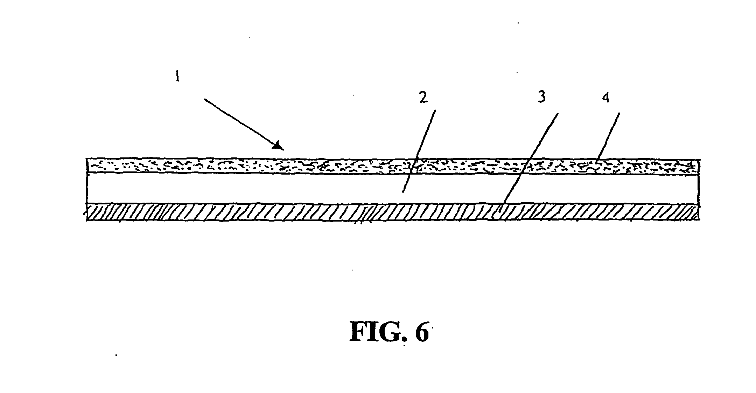

FIG. 6 is a cross sectional view of a container wall according to a fourth embodiment of the present invention. A PE layer 4 has been applied to an outside surface or interior surface, e.g. a surface opposite to the foam layer 3 with respect to the paper stock 2. The PE layer 4 can be laminated, extruded or coated onto the paper stock surface. The PE layer 4 also serves a barrier to the beverage or food placed within the container, and can also serve as a sealing mechanism. Alternatively, the PE layer 4 could be applied as the innermost layer, e.g., closest to the beverage containing space 11. Further, additional PE layers 4 and/or foam layers 3 can be applied to either the inside or outside surfaces of the container wall 1 as desired to add additional barriers and/or thermal resistance to the liquid or heat sealed within (or excluded from) the container. The PE layer 4 can be applied directly to the paper stock 2 or indirectly over the foam 3.

A preferred coating material for additional coating layers for the present invention is an expanding foam. This expanding foam material is encapsulated isobutane in a polymeric shell. The expanding foam capsules are added to the coating with a small, e.g., unexpanded, diameter. Upon drying the foam and increasing the heat to a certain temperature, the encapsulated isobutane changes from a liquid to a gas and the polymeric shell expands with the appropriate volumetric change.

The resulting expanded spheres or cavities have a very low density and low thermal conductivity. Expanded foam also has the advantage of creating a rough surface that will further reduce the contact area between layers in the container wall and therefore reduce heat transfer. A thin layer of the expanding foam coated onto the paper stock exterior is especially useful for roughening or for texturing to aid in gripping the container.

A preferred coating is a foamed coating. Foamed coating is a coating that utilizes entrained air. The dispersed air in the coating provides a low coating density and low thermal conductivity. The foamed coating also accepts and is easily processed to achieve surface modification. The foamed coating will therefore allow a rough or perforated surface to be created through the use of an embosser, press or other mechanical device.

Foam coating also has the ability to be used as a single coating, or may also act as the insulating coating and a printing coating simultaneously, depending on the application and desires of the end user.

The selected coating materials for the insulating coating are dispersed in an aqueous system with additional components added as necessary to provide ease of processing and application. Pigments such as silica, calcium carbonate, clay and synthetic pigments may be also used.

Binders are included to adhere the coating to the paper substrate. Typical binders may be selected from, but are not limited to, polyvinyl alcohol, SBR latex, starch, polyacrylates and other binders well known in the related art. Other additives may be included in the coating to aid in dispersion, rheology and coating handling. These additives include, but are not limited to, defoamers, dispersants, wetting agents, conductive polymers, styrene malefic anhydride, thickeners, etc.

An insulating coating can be applied that is between 3 and 44 g/m² (2 and 30 lbs / 3300 ft²), and more preferably between 7 and 22 g/m² (5 and 15 lbs / 3300 ft²). A preferred thickness of the insulating coating is between (1 and 15 mils), most preferably between 76 and 254 µm (3 and 10 mils).

US-A- 5,911,904 to Shih et al; US-A-5,993,705 to Grischchenko et al.; and US-A-6,085,970 to Sadlier, although directed toward distinct insulating container coatings and fabrication processes from that of the present invention, generally describe many of the manufacturing coating, heating and assembling processes that are commonly utilized in the paper cup/container stock art. The complete details of these coatings, heating and assembling processes are herein incorporated by reference in the present application.

The preferred embodiments depicted in the accompanying figures are directed toward the application of a foam layer 3 toward or along the interior surface of a container (e.g., beverage-side of the container). However, it will be appreciated by one of ordinary skill in the art that the foam layer 3 can be alternatively, or in combination with the PE film layer 4, applied along the exterior surface of the container.

The inventors of the present invention have discovered highly favorable, and heretofore unexpected, results when testing was conducted of the various preferred embodiments of the present invention. For example, a beverage container 10 constructed with a container wall 1 having the construction shown in FIG. 3 has demonstrated extraordinary hold times, moisture inhibition and resistance to vapor transmission. Further, the inventors of the present invention have demonstrated that hold times are significantly increased with the embodiment shown in FIG. 3 as compared to providing a moisture foam layer 3 blown on the outside surface of the paper stock 2, such as the PerfecTouch™ cup sold by Georgia Pacific™.

As aforementioned, a quantitative measurement of the ability of a paper stock to withstand heat transfer between the beverage containing space and the outermost surface of the container is often referred to as hold time. Accordingly, how long one can comfortably hold the hot container 10, e.g., hold time, is significantly reduced.

The preferred embodiment shown in FIG. 3 appears to best inhibit heat transfer to the paper stock 2, thereby reducing heat transfer by providing a moisture vapor transmission barrier at the innermost surface which prevents heating by mass transfer of that vapor through the cupstock. Hold times were significantly increased with the preferred embodiments of the present invention.

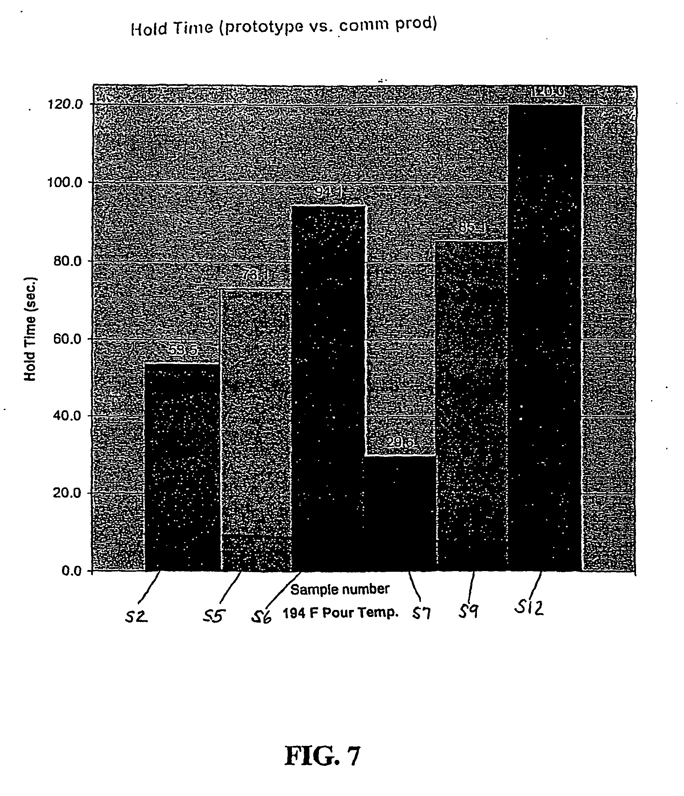

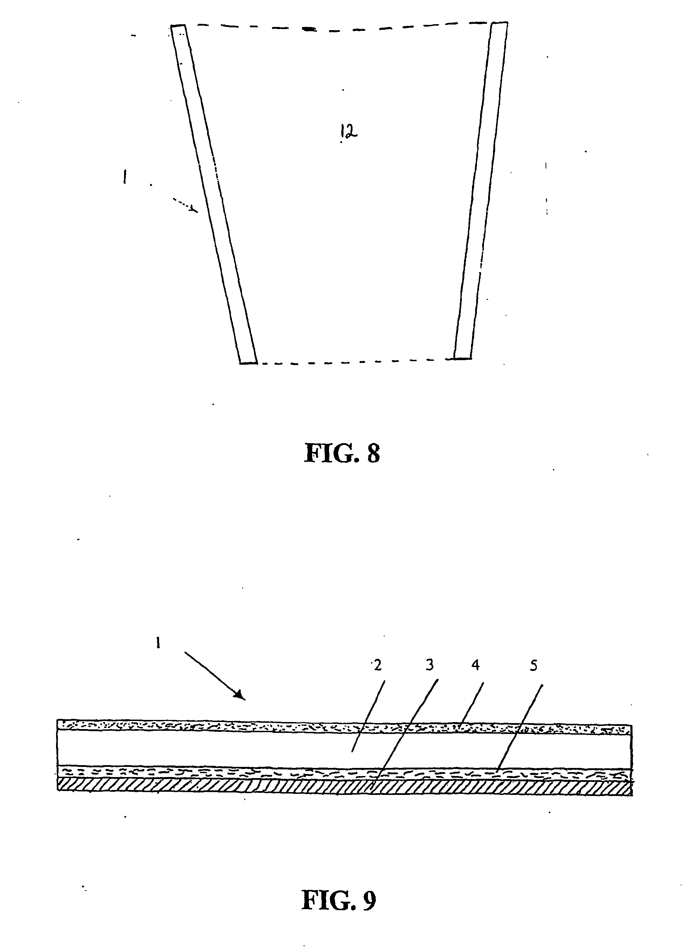

FIG. 7 is a graphical view of experimental data representing actual and comparative hold times for embodiments of the present invention and commercial available products and will be discussed further hereinafter. FIG. 8 is a cross sectional view of an insulating beverage container sleeve 12 according to the present invention. FIG. 8 is a cross-sectional view of an insulated beverage container wall 1 or beverage container sleeve wall 1 according to another embodiment of the present invention.

It will be appreciated that an insulating beverage container sleeve 12 can readily incorporate any of the applicable embodiments of beverage container stock material (container wall) 1 shown in the accompanying drawings. An insulating beverage container sleeve 12 is often slipped over the outer surface of a beverage container such as that shown in FIG. 1. As seen in FIG. 9, an intermediate layer 5 may be provided between the paper stock 2 and foam layer 3. The intermediate layer 5 is applied to the paper stock as an extrusion, lamination, or coating. The purpose of the intermediate layer 5 is to adhere the gas containing film layer 3 to the paper stock 2.

However, the intermediate layer 5 can also be utilized as a barrier to moisture transmission and as an aid in seam sealing during sleeve construction. Typical materials used for intermediate layer 5 include, but are not limited to: high density polyethylene (HDPE), low density polyethylene (LDPE), linear low density polyethylene (LLDP), orientated polypropylene(OPP); and adhesives, such as hot melt adhesives, water based adhesives and solvent based adhesives, etc.

Additives known in the industry may be included to enhance certain properties or aid in processing and may include, but are not limited to: ethylene vinyl acetate (EVA), ethylene vinyl alcohol (EVOH), and plasticizers. Exterior layer 4 is applied to the paper stock to provide a surface which may have the following properties depending on end use, including but not limited to: materials accepting high quality graphics and printing inks, materials providing tactile feel, materials that change color with temperature, materials providing seam sealing capabilities, and materials providing a more secure gripping surface, etc. The sleeve 12 construction may be preferentially oriented with the foam material 3 toward the cup 11 surface and the paper surface 2, 4 facing outward, e.g., visible to the user. However, the sleeve construction can be inverted with the foam on the exterior and the paper surface(s) 2, 4 facing inwardly toward the cup/container 11 wall. A PE layer as aforementioned can also be applied (not shown in FIG. 9) along the interior surface of the container, e.g. between the foam layer 3 and the beverage containing space 11 when the embodiment of FIG. 9 is applied to a container 10.

FIG. 7 is a graphical view of experimental data representing actual and comparative hold times for embodiments of the present invention and commercial available products. FIG. 7 shows experimental hold times (measured in seconds) achieved for different samples. The various samples or beverage containers were filled with approximately 230 ml of water at approximately 90 ° C (194 ° F pour temperature).

In Table I, Sample S2 is a product/container sample having 15/15/15 pt base stock/air w/corrugation/base stock. Sample S5, Sample S6, and Sample S7 are test samples of the present invention incorporating a container wall 1 with construction similar to that shown in Fig. 3. Sample S5 is a 10 pt foam 18 pt base paper laminate. S6 is a 20 point foam 18 pt base paper laminate. S7 is a 30 pt foam 18 pt base paper laminate. Sample S9 is a paper stock with a moisture blow polyethylene exterior such as the PerfecTouch ™ container available from .Fort James. Sample S12 is a laminate foam 18 pt base with 20 pt polyethylene foam.

Testing was conducted of different samples to determine average hold times after several iterations of testing. A control test person was used in many testing results to maintain data integrity. In alternative testing, several different control test persons were utilized.

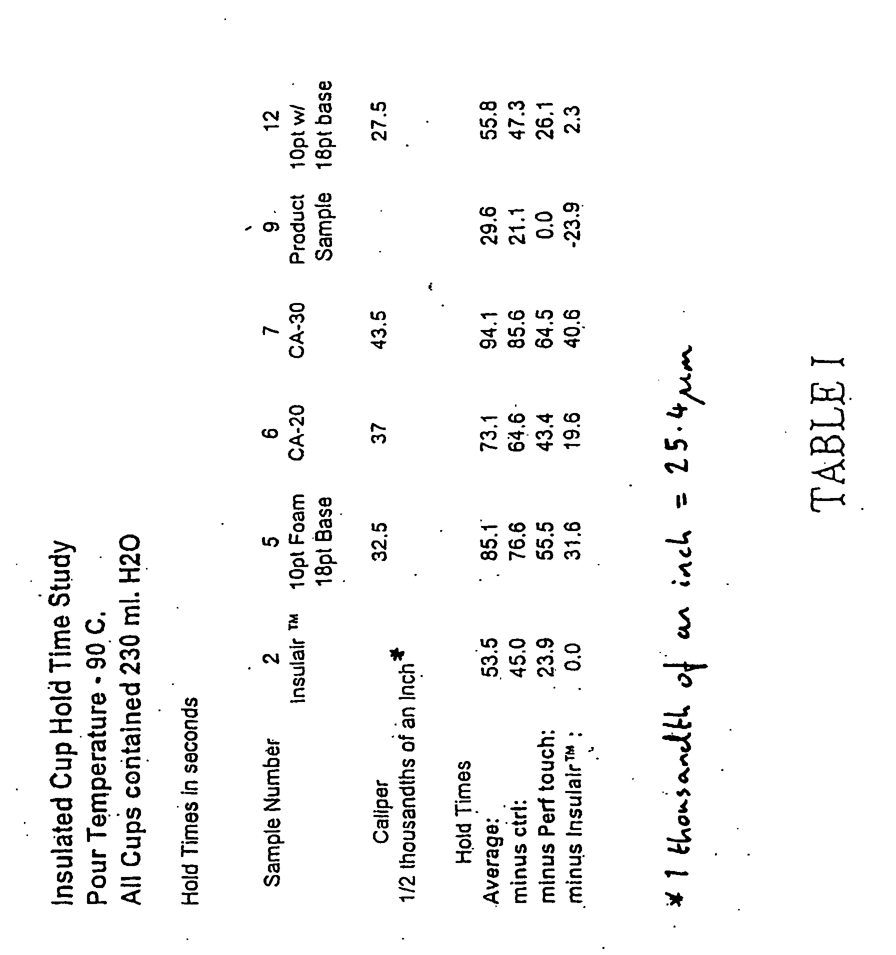

Table I provides experimental test results of insulated cup hold time studies conducted at a pour temperature of 90 °C and with approximately 230 ml of water. Table I is directed toward the test results of the various samples.

### Anti-Wrinkling Effects

Paper stock-based laminates may suffer from wrinkling or creasing of the innermost layers of a final product after manufacture. For example, a beverage container 11 or sleeve 12 utilizing a foam layer.3 along the interior may experience a particularly problematic wrinkling effect. During a cup making process, blanks for cups are often die cut and then shaped around a cylindrical mandrel. Accordingly, the cup diameter will vary depending on the substrate thickness or caliper of each layer of the laminate, the number of layers and the type of materials utilized in each layer. Accordingly, the change in cup diameter, ΔD, can be quantified according to the following relationship, wherein C is the substrate thickness or caliper, ΔD = 2C. However, as seen in FIG. 1, the diameter will also vary depending on where it is measured, e.g. the diameter along the upper side surface. 7 is greater than that along the lower side surface 8.

Accordingly, the thicker the substrate, the greater the difference between the innermost and outermost diameters. Since both surfaces of the substrate start out at the same length, the difference in diameter creates a system that is under stress. The cup forming substrate, such as a paper stock 2, has a relatively large caliper. A foam layer 3 along the interior surface is relatively soft and pliable. Therefore, the foam properties along the interior surface, coupled with the change in diameter, cause wrinkles to form under the stress (with less ability to withstand the stress) of conforming to a relatively smaller diameter.

The cross-section shown in FIG. 3 is exemplary of a container 10 having a PE layer 4, wherein the foam layer 3 is sandwiched in between the paper stock layer 2 and the PE layer 4. The cross-section shown in FIG. 4 is exemplary of an insulating foam layer 3 adhered to the paperboard stock layer 2 by a PE layer 4 that may exhibit the aforementioned wrinkling effect. As seen in FIG. 5, another embodiment includes at least two PE layers 4, wherein an inner surface of the container employing this cross section will also have a PE layer 4 closest to the beverage container space 11.

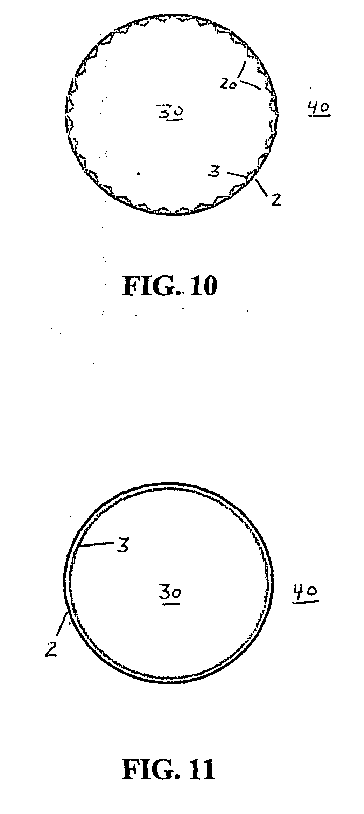

FIG. 10 is a plan view depicting an interior and exterior of a beverage container or sleeve wall according to another embodiment of the present invention. FIG. 11 is a plan view depicting an interior and exterior of a beverage container or sleeve wall according to another embodiment of the present invention. These wrinkles 20 or creases become undesirable and problematic in the finished cup or sleeve. The folds in the wrinkles 20 tend to trap the beverage in the cup causing staining and/or loss of product. The wrinkling effect also detracts from the aesthetic value of the finished product.

FIGs. 10-11 are also directed toward a method of making a beverage container or sleeve that eliminates or substantially reduces the amount of wrinkling occurring along a container's interior 30. FIGs. 10 and 11 depict the interior cup surface 30 and exterior cup surface 40 of a container before and after heating and shrinking the polymer shrink film layer (PE layer) 4, respectively, according to an embodiment of the present invention. In FIG. 10 the foam layer 3 has wrinkled under the stresses of conforming to a smaller diameter. After being subjected to a heating process, the foam shrinks, producing a taut, smooth layer as shown in FIG. 11.

During high speed cup forming, die cut paper may be wrapped around a mandrel to form the container cylinder. Due to the relative change in diameter, the inner surface 30 is now under stress. By choosing a foam layer 3 that has shrink properties, the wrinkles can be removed through the application of heat. A formed cup with a wrinkled interior can be exposed to heat, causing the foam to shrink and remove the wrinkles 20. As long as sufficient heat is applied to smooth out the wrinkles while not overheating the film to cause degradation, the specific details of the heat application method are not critical. In an ideal embodiment, the heating method and/or equipment can be incorporated into existing cup making equipment.

The heating process can include localized heating or shrinking processes, e.g., only the interior surface is subjected to a heating process, such as heated process air being passed exclusively along the interior surface 30. However, one of skill in the art will appreciate that the entire container or various ratios of controlled heating may be employed, e.g., interior surface heating rate to exterior surface heating rate being increased so that an interior to exterior ratio is generally higher than 1:1.

The elimination of wrinkles 20 can be accomplished with any combination of heating and/or the incorporation of polymers for the foam layer 3 and polymer shrink film layer 4 having desirable heat shrink properties. The air used to transport and stack the finished cups can be heating, the forming mandrels can be heated, the cup can be transported through a tunnel heater or other heating device, and/or a heated air stream can be passed across the cup's interior surface 30.

Shrink films can be made out of a wide range of commercially available polymers. Table II lists some applicable shrink-films commercially available in the United States. However, one of skill in the art will appreciate that other commercially available films are available or are currently being developed. Accordingly, any shrink film having desirable shrink film properties for the present invention is within the spirit and scope of the present invention. The polymers chosen and the polymer processing history are two major factors influencing the foam shrink properties. The polymer type and processing method should be selected to create the amount of shrinkage necessary while maintaining foam integrity. *The Wiley Encyclopedia of Packaging Technology,* Second Edition, Aaron L. Brody and Kenneth S. Marsh, John Wiley and Sons, 1997, describes additional examples of suitable shrink films and their related properties.

**TABLE II:**

| **Commercially Available Shrink Films** | | |
|---|---|---|
| **Shrink Film** | **Polymer Type** | **Commercial Product** |
| Polyethylene Monolayer | Polyolefins | DuPont Clysar® HP, LLP; and Cryovac D601 |
| Polyethylene Multilayer | Polyolefins | Cryovac D955, D940, RD106, D959 |
| Polypropylene/monolayer ethylene--ropylene copolymer | Polyolefins | DuPont Clysar EHC, CHS, RSW; Okura Vanguard® 100; and Gunze PSS |
| PP/EPC Multilayer | Polyolefins | Cryovac MPD2055, MPD2100, J960, J961; Okura Vanguard® 501; Intertape Exlfilm® IP-83; and Dupont Clysar EZ® |
| Biaxially Oriented | Polyvinyl Chloride (PVC) | Reynolds Reynolon® 1044, 2044, 3044, 4044, 5044; Allied Krystaltite® T111, T122, T133, T144, T15, R11, R22, R44; and Gunze Fancywrap® |
| Preferentially Oriented | Polyvinyl Chloride (PVC) | Reynolds Reynolon® 3023, 4061, 5032, 7052; and Allied Krystaltite PT152® |
| Aroma and Oxygen Barrier | Specialty Films | Cryovac BDF2001, BDF2050 |
| Moisture Barrier | Specialty Films | Cryovac BDF1000 |
| Moisture, Gas and Aroma Barrier | Specialty Films | Cryovac BDF 3000 |

Preferred shrink films for the present invention, particularly polyethylene and/or modified polyethylene films, are determined by their properties and cost. Specific examples of shrink films for the foam layer 3 of the present invention are high density polyethylene or blends of HDPE and linear low density polyethylene (LLDPE), e.g., not more than 30% by weight. The shrink films are created by stretching the warm film and keeping it under tension while cooling. The polymer chains are then locked into a stressed state. Upon being subjected to a heating process near the melting point of the shrink film, the chains relax and the film shrinks.

In a preferred embodiment, required "percent shrink" is low relative to shrink films commercially marketed under this category. Typical shrink films will shrink on the order of 70-80% if unrestrained. The present inventors have determined that too much shrinkage of the foam layer 3 will cause the film to pull away from the container wall 11 and/or delaminate. Further, too much shrinkage will result in undesired interior cup space loss and reduced stacking efficiencies. The present inventors have determined that a foam layer 3 having a percent shrink of between 5-30%, and more preferably a percent shrink of 5-10%, will create the best results. Films with higher shrinkage rates may be used if additional considerations are taken to control the shrinkage of the container, such as controlling shrinkage through the use of an inserted mandrel or other physically limiting device.

The shrink initiation temperature is another key attribute of a preferred shrink film. A shrink film can be designed to shrink at 88°C (190 ° F), such as when hot coffee is poured into a container thereby causing wrinkles 20 to be pulled or smoothed out under tension. In addition, a shrink film can be selected that shrinks at a temperature well above 88°C (190 ° F), such as during a relatively high manufacturing process temperature so that wrinkles are removed prior to the actual use of the container. If the initiation temperature is low, the total amount of shrinkage must also be low. For example, if the initiation temperature is 88°C (190 ° F), and 93°C (200 ° F) coffee is poured into the cup, the shrinkage must be low to avoid cup volume loss and expulsion of hot coffee as the volume decreases.

A method of producing an insulated container may include the steps of providing a paper cupstock having a container wall 1 for surrounding an interior space 11, a bottom portion 9, and a paper stock layer 2 arranged along an exterior surface 40 of the container wall 1; mixing a blowing agent into a foamable polymer layer 3; forming a foam layer 3 along an inside surface 30 of the interior space 11; adhering a polymer shrink film layer 4, e.g., PE layer 4, to the foam layer 3; and heat treating the container to shrink the polymer shrink film layer between a percent shrink range of 30% or less. The foam layer 3 is adhered to the paper cupstock 2, either directly or indirectly through another intermediate layer 5, e.g. such as an additional PE layer 4.

The aforementioned method of producing an insulated food or beverage container or sleeve, may also include the steps of providing an insulated container or sleeve having an interior space 11, the interior space 11 including a polymer shrink film layer 4 and a foam layer 4 along an interior surface 30 thereof. The interior surface 30 is heated to shrink the polymer shrink film layer 20 and remove wrinkles along the foam layer(s) 3 and polymer shrink film layer(s) 4 during the heating step to thereby prevent an undesirable wrinkling effect in the interior space 30.

The heat treatment process is employed either during the manufacturing process or during product use, e.g., hot cup of coffee produces desired shrinkage for shrinking the foam layer to remove wrinkles at a percent shrink range of 5-30%. The heat treatment process may also be any conventional heat treatment process for shrinking polymer shrink films available in the related art. This includes both heating and cooling processes, including combinations thereof. *The Wiley Encyclopedia of Packaging Technology*, Second Edition, Aaron L. Brody and Kenneth S. Marsh, John Wiley and Sons, 1997, describes specific examples of heat treatment processes for implementing shrink films. Specifically, the present invention may utilize conventional heat treatment processes such as a tenter-frame process, a bubble process, combinations thereof and/or their equivalents.

The invention being thus described, it will be obvious that the same may be varied in many ways. Such variations are not to be regarded as a departure from the scope of the invention, as defined by the scope of the following claims.

## Claims

1. An insulated container comprising:
a container wall (1) having an exterior surface and an interior surface;
a bottom portion (9) engaging said container wall along a lower side portion (8) thereof;
said container wall (1) comprising:
a paper stock layer (2) arranged along the exterior surface of said container wall;
an extruded or laminated foam layer (3) arranged inside said paper stock layer (2); and
a polymer shrink film layer (4) arranged inside said paper stock layer (2), said polymer shrink film layer (4) having a percent shrink of from 5 to 30%.

2. The insulated container according to claim 1, wherein said container wall (1) further comprises an additional polymer film layer inside said paper stock layer (2), said foam layer (3) being sandwiched between said additional polymer film layer and said polymer shrink film layer (4).

3. The insulated container according to claim 1, wherein said foam layer (3) is sandwiched between said paper stock layer (2) and said polymer shrink film layer (4).

4. The insulated container according to claim 1, wherein said paper stock layer has a thickness greater than or equal to 254 µm (10 mils) and less than or equal to 660 µm (26 mils).

5. The insulated container according to any preceding claim, wherein foam layer (3) is formed from at least one of high density polyethylene, low density polyethylene, linear low density polyethylene, and oriented polypropylene.

6. The insulated container according to any preceding claim, wherein said polymer shrink film layer (4) is a laminated or extruded shrink film polymer formed from at least one of high density polyethylene, low density polyethylene, linear low density polyethylene, and oriented polypropylene.

7. The insulated container according to any preceding claim, wherein said percent shrink of said polymer shrink film layer (4) is from 5 to 10 %.

8. The insulated container according to any preceding claim, wherein said foam layer (3) is adhered to said paper stock layer (2) by melt extrusion, lamination or foam extrusion.

9. The insulated container according to any preceding claim, wherein said polymer shrink film layer (4) forms the innermost surface of said container wall (1).

10. An insulated food or beverage container sleeve comprising:
a paper stock layer (2) having an interior surface;
a laminated or extruded foam layer (3), said foam layer being disposed along the interior surface of the paper stock layer (2); and
a polymer shrink film layer (4) having a percent shrink of from 5 to 30%, said foam layer (3) being sandwiched between said paper stock layer (2) and said polymer shrink film layer.

11. The insulated food or beverage container sleeve according to claim 10, further comprising an additional polymer film layer sandwiched between said paper stock layer and said foam layer.

12. An insulated container stock material for making an insulated container according to any of claims 1 to 8, said stock material comprising:
a paper stock layer (2);
a laminated or extruded foam layer (3) formed from high density polyethylene, low density polyethylene, linear low density polyethylene, or oriented polypropylene, said foam layer being arranged along a first surface said paper stock layer; and
a polymer shrink film layer (4) having a percent shrink of from 5 to 30% and also arranged along said first surface of said paper stock layer (2).

13. The insulated container stock material according to claim 12, further comprising an additional polymer film layer, said foam layer (3) being sandwiched between said additional polymer film layer and said polymer shrink film layer (4).

14. The insulated container according to claim 12, wherein said foam layer (3) is sandwiched between said paper stock layer (2) and said polymer shrink film layer (4).

15. The insulated container stock material according to any of claims 12 to 14, wherein said paper stock material has a thickness greater than or equal to 254 µm (10 mils) and less than or equal to 660 µm (26 mils).

16. The insulated container stock material according to any of claims 13 to 14, wherein said polymer shrink film layer (4) is a laminated or extruded shrink film polymer formed from at least one of high density polyethylene, low density polyethylene, linear low density polyethylene, and oriented polypropylene.

17. The insulated container stock material according to any of claims 12 to 16, wherein said percent shrink of said polymer shrink film layer (4) is from 5 to 10 %.

18. The insulated container stock material according to any of claims 12 to 17, wherein said foam layer (3) is adhered to said paper stock layer (2) by melt extrusion, lamination or foam extrusion.

19. A method of producing an insulated food or beverage container or sleeve, comprising the steps of:
providing an insulated container or sleeve having a wall defining an interior space, said wall having arranged along an interior surface thereof a polymer shrink film layer (4) having a percent shrink of from 5 to 30% and an extruded or laminated foam layer (3);
heating the interior surface to shrink the polymer film layer (4); and
removing wrinkles along the foam (3) and polymer shrink film (4) layers during the heating step to thereby prevent a wrinkling effect in the interior space.

20. The method of producing an insulated food or beverage container according to claim 19, wherein the heating step includes at least one of heating a supply of air for transporting and stacking the food or beverage container, heating a forming mandrel for the food or beverage container, and transporting the food or beverage container through a tunnel heater.

21. The method of producing an insulated food or beverage container according to claim 19, wherein said step of providing comprises forming a food or beverage container or sleeve from an insulated container stock material according to any of claims 12 to 18.

## Patentansprüche

1. Isolierter Behälter, umfassend:
eine Behälterwand (1) mit einer Außenoberfläche und einer Innenoberfläche;
einen Bodenteil (9), der mit der Behälterwand entlang eines unteren Seitenteils (8) davon in Eingriff steht;
wobei die Behälterwand (1) umfasst:
eine Papierstofflage (2), die entlang der Außenoberfläche der Behälterwand angeordnet ist;
eine extrudierte oder laminierte Schaumlage (3), die in der Papierstofflage (2) angeordnet ist; und
eine Polymerschrumpffolienlage (4), die in der Papierstofflage (2) angeordnet ist, wobei die Polymerschrumpffolienlage (4) eine prozentuale Schrumpfung von 5 bis 30 % aufweist.

2. Isolierter Behälter nach Anspruch 1, worin die Behälterwand (1) weiterhin eine Zusatzpolymerfolienlage in der Papierstofflage (2) umfasst, wobei die Schaumlage (3) sandwichförmig zwischen der zusätzlichen Polymerfolienlage und der Polymerschrumpffolienlage (4) gelegt ist.

3. Isolierter Behälter nach Anspruch 1, worin die Schaumlage (3) sandwichartig zwischen die Papierstofflage (2) und die Polymerschrumpffilmlage (4) gelegt ist.

4. Isolierter Behälter nach Anspruch 1, worin die Papierstofflage eine Dicke größer als oder gleich 254 µm (10 mils) und weniger oder gleich 660 µm (26 mils) hat.

5. Isolierter Behälter nach einem der vorhergehenden Ansprüche, worin die Schaumlage (3) aus wenigstens einem Polyethylen hoher Dichte, Polyethylen niedriger Dichte, linearem Polyethylen niedriger Dichte und orientiertem Polypropylen gebildet ist.

6. Isolierter Behälter nach einem der vorhergehenden Ansprüche, worin die Polymerschrumpffolienlage (4) ein laminiertes oder extrudiertes Schrumpffolienpolymer ist, gebildet aus wenigstens einem Hochdichte-Polyethylen, einem Polyethylen niedriger Dichte, linearem Polyethylen niedriger Dichte und orientiertem Polypropylen.

7. Isolierter Behälter nach einem der vorhergehenden Ansprüche, worin die prozentuale Schrumpfung der Polymer-Schrumpffolienlage (4) 5 bis 10% ist.

8. Isolierter Behälter nach einem der vorhergehenden Ansprüche, worin die Schaumlage (3) an die Papierstofflage (2) durch Schmelzextrusion, Laminieren oder Schaumextrusion geklebt ist.

9. Isolierter Behälter nach einem der vorhergehenden Ansprüche, worin die Polymerschrumpffolienlage (4) die innerste Oberfläche der Behälterwand (1) bildet.

10. Isolierte Nahrungsmittel- oder Getränkebehälterhülle, umfassend:
eine Papierstofflage (2) mit einer Innenoberfläche;
eine laminierte oder extrudierte Schaumlage (3), wobei die Schaumlage entlang der Innenfläche der Papierstofflage (2) angeordnet ist; und
eine Polymerschrumpffolienlage (4) mit einer prozentualen Schrumpfung von 5 bis 30%, wobei die Schaumlage (3) sandwichartig zwischen der Papierstofflage (2) und die Polymerschrumpffolienlage gelegt ist.

11. Isolierte Nahrungsmittel- oder Getränkebehälterhülle nach Anspruch 10, welche weiterhin eine zusätzliche Polymerfolienlage umfasst, die sandwichartig zwischen die Papierstofflage und die Schaumlage gelegt ist.

12. Isolierbehälterrohmaterial zum Herstellen eines Isolierbehälters nach einem der Ansprüche 1 bis 8, wobei das Rohmaterial umfasst:
eine Papierstofflage (2);
eine laminierte oder extrudierte Schaumlage (3), gebildet aus einem Polyethylen hoher Dichte, Polyethylen niedriger Dichte, linearem Polyethylen niedriger Dichte oder orientiertem Polypropylen, wobei die Schaumlage entlang einer ersten Oberfläche der Papierstofflage angeordnet ist; und
eine Polymerschrumpffolienlage (4) mit einer prozentualen Schrumpfung von 5 bis 30% und auch entlang der ersten Oberfläche der Papierstofflage (2) angeordnet.

13. Isolierbehälterrohmaterial nach Anspruch 12, weiterhin umfassend eine zusätzliche Polymerfolienlage, wobei die Schaumlage (3) sandwichartig zwischen die Zusatzpolymerfolienlage und die Polymerschrumpffolienlage (4) gelegt ist.

14. Isolierbehälter nach Anspruch 12, worin die Schaumlage (3) sandwichartig zwischen die Papierstofflage (2) und die Polymerschrumpffolienlage (4) gelegt ist.

15. Isolierbehälterrohmaterial nach einem der Ansprüche 12 bis 14, worin das Papierstoffmaterial eine Dicke größer als oder gleich 254 µm (10 mils) und kleiner als oder gleich 660 µm (26 mils) hat.

16. Isolierbehälterrohmaterial nach einem der Ansprüche 13 bis 14, worin die Polymerschrumpffolienlage (4) ein laminiertes oder extrudiertes Schrumpffolienpolymer ist, gebildet aus wenigstens einem Polyethylen hoher Dichte, Polyethylen niedriger Dichte, linearem Polyethylen niedriger Dichte und orientiertem Polypropylen.

17. Isolierbehälterrohmaterial nach einem der Ansprüche 12 bis 16, worin die prozentuale Schrumpfung der Polymerschrumpffolienlage (4) 5 bis 10% ist.

18. Isolierbehälterrohmaterial nach einem der Ansprüche 12 bis 17, worin die Schaumlage (3) an die Papierstofflage (2) durch Schmelzextrusion, Laminieren oder Schaumextrusion geklebt ist.

19. Verfahren zum Erzeugen eines isolierten Nahrungsmittel- oder Getränkebehälters oder einer Nahrungsmittel- oder Getränkebehälterhülle, umfassend die Schritte von:
Bereitstellen eines isolierten Behälters oder Hülle mit einer Wand, die einen Innenraum definiert, wobei die Wand entlang einer Innenoberfläche davon eine Polymerschrumpffolienlage (4) angeordnet hat, mit einer prozentualen Schrumpfung von 5 bis 30% und einer extrudierten oder laminierten Schaumlage (3); Heizen der Innenoberfläche, um die Polymerfolienlage (4) zu schrumpfen; und
Entfernen der Falten entlang der Schaumlage (3) und Polymerschrumpffolienlage (4) beim Heizschritt, um **dadurch** einen Faltungseffekt des Innenraums zu vermeiden.

20. Verfahren zum Herstellen eines isolierten Nahrungsmittel- oder Getränkebehälters nach Anspruch 19, worin der Heizschritt wenigstens einen aus Aufheizen einer Luftzufuhr zum Transportieren und Schichten des Nahrungsmittel- oder Getränkebehälters, Heizen einer Formspindel für den Nahrungsmittel- oder Getränkebehälter und Transportieren des Nahrungsmittel- oder Getränkebehälters durch eine Tunnelheizung umfasst.

21. Verfahren zum Herstellen eines isolierten Nahrungsmittel- oder Getränkebehälters nach Anspruch 19, worin der Schritt des Bereitstellens die Bildung eines Nahrungsmittel- oder Getränkebehälters oder einer Nahrungsmittel- oder Getränkebehälterhülle aus einem Isolierbehälterrohmaterial nach einem der Ansprüche 12 bis 18 umfasst.

## Revendications

1. Récipient isolé, comprenant :
une paroi de récipient (1) ayant une surface extérieure et une surface intérieure ;
une partie de fond (9) entrant en prise avec ladite paroi de récipient le long d'une partie latérale inférieure (8) de cette dernière ;
ladite paroi (1) de récipient comprenant :
une couche (2) de papier support disposée le long de la surface extérieure de ladite paroi de récipient ;
une couche de mousse (3), extrudée ou contrecollée, disposée à l'intérieur de ladite couche (2) de papier support ; et
une couche (4) d'un film rétractable polymère disposée à l'intérieur de ladite couche (2) de papier support, ladite couche (4) de film rétractable polymère ayant un taux de rétractabilité de 5 à 30 %.

2. Récipient isolé selon la revendication 1, dans lequel ladite paroi (1) du récipient comprend en outre une couche supplémentaire d'un film polymère à l'intérieur de la couche (2) de papier support, ladite couche de mousse (3) étant intercalée entre ladite couche de film polymère supplémentaire et ladite couche (4) de film rétractable polymère.

3. Récipient isolé selon la revendication 1, dans lequel ladite couche de mousse (3) est intercalée entre ladite couche (2) de papier support et ladite couche (4) de film rétractable polymère.

4. Récipient isolé selon la revendication 1, dans lequel ladite couche de papier support a une épaisseur supérieure ou égale à 254 µm (10 mils) et inférieure ou égale à 660 µm (26 mils).

5. Récipient isolé selon l'une quelconque des revendications précédentes, dans lequel la couche de mousse (3) est formée à partir de l'un des matériaux polyéthylène haute densité, polyéthylène basse densité, polyéthylène basse densité linéaire et polypropylène orienté.

6. Récipient isolé selon l'une quelconque des revendications précédentes, dans lequel ladite couche (4) de film rétractable polymère est un polymère formant un film rétractable contrecollé ou extrudé formé à partir d'au moins l'un des matériaux polyéthylène haute densité, polyéthylène basse densité, polyéthylène basse densité linéaire et polypropylène orienté.

7. Récipient isolé selon l'une quelconque des revendications précédentes, dans lequel ledit taux de rétractabilité de ladite couche (4) de film rétractable polymère est de 5 à 10 %.

8. Récipient isolé selon l'une quelconque des revendications précédentes, dans lequel ladite couche de mousse (3) est mise à adhérer à ladite couche (2) de papier support par extrusion de matière fondue, contrecollage ou extrusion de mousse.

9. Récipient isolé selon l'une quelconque des revendications précédentes, dans lequel ladite couche (4) de film rétractable polymère forme la surface le plus intérieure de ladite paroi (1) du récipient.

10. Manchon formant récipient isolé pour aliments ou boissons, comprenant :
une couche (2) de papier support ayant une surface intérieure ;
une couche de mousse (3) contrecollée ou extrudée, ladite couche de mousse étant disposée le long de la surface intérieure de la couche (2) de papier support ; et
une couche (4) de film rétractable polymère ayant un taux de rétractabilité de 5 à 30 %, ladite couche de mousse (3) étant intercalée entre ladite couche (2) de papier support et ladite couche de film rétractable polymère.

11. Manchon formant récipient isolé pour aliments ou boissons selon la revendication 10, qui comprend en outre une couche supplémentaire d'un film polymère, intercalée entre ladite couche de papier support et ladite couche de mousse.

12. Matière première pour récipient isolé, pour fabriquer un récipient isolé selon l'une quelconque des revendications 1 à 8, ladite matière première comprenant :
une couche (2) de papier support ;
une couche de mousse (3) contrecollée ou extrudée formée à partir de polyéthylène haute densité, de polyéthylène basse densité, de polyéthylène basse densité linéaire ou de polypropylène orienté, ladite couche de mousse étant disposée le long d'une première surface de ladite couche de papier support ; et
une couche (4) de film rétractable polymère ayant un taux de rétractabilité de 5 à 30 % et disposée aussi le long de ladite première surface de ladite couche (2) de papier support.

13. Matière première pour récipient isolé selon la revendication 12, qui comprend en outre une couche supplémentaire de film polymère, ladite couche de mousse (3) étant intercalée entre ladite couche additionnelle de film polymère et ladite couche (4) de film rétractable polymère.

14. Récipient isolé selon la revendication 12, dans lequel ladite couche de mousse (3) est intercalée entre ladite couche (2) de papier support et ladite couche (4) de film rétractable polymère.

15. Matière première pour récipient isolé selon l'une quelconque des revendications 12 à 14, où ledit matériau formant papier support a une épaisseur supérieure ou égale à 254 µm (10 mils) et inférieure ou égale à 660 µm (26 mils).

16. Matière première pour récipient isolé selon l'une quelconque des revendications 13 à 14, où ladite couche (4) de film rétractable polymère est un polymère formant film rétractable contrecollé ou extrudé, formé à partir d'au moins l'un des matériaux polyéthylène haute densité, polyéthylène basse densité, polyéthylène basse densité linéaire et polypropylène orienté.

17. Matière première pour récipient isolé selon l'une quelconque des revendications 12 à 16, où ledit taux de rétractabilité de ladite couche (4) de film rétractable polymère est de 5 à 10 %.

18. Matière première pour récipient isolé selon l'une quelconque des revendications 12 à 17, où ladite couche de mousse (3) est mise à adhérer à ladite couche (2) de papier support par extrusion de matière fondue, contrecollage ou extrusion de mousse.

19. Procédé de production d'un récipient ou d'un manchon isolé pour aliments ou boissons, comprenant les étapes consistant :
à mettre à disposition un récipient ou un manchon isolé ayant une paroi définissant un espace intérieur, ladite paroi possédant, disposée le long d'une surface intérieure de ladite paroi, une couche (4) de film rétractable polymère ayant un taux de rétractabilité de 5 à 30 % et une couche de mousse (3) extrudée ou contrecollée ;
à chauffer la surface intérieure pour provoquer le retrait de la couche (4) de film polymère ; et
à éliminer les faux-plis le long des couches (3) de mousse et (4) de film rétractable polymère pendant l'étape de chauffage, pour éviter de ce fait un effet de faux plis dans l'espace intérieur.

20. Procédé de production d'un récipient isolé pour aliments ou boissons selon la revendication 19, dans lequel l'étape de chauffage comprend au moins l'une des opérations consistant à chauffer un apport d'air pour transporter et empiler le récipient pour aliments ou boissons, à chauffer un mandrin de façonnage pour le récipient pour aliments ou boissons, et à transporter à travers un tunnel chauffant le récipient pour aliments ou boissons.

21. Procédé de production d'un récipient isolé pour aliments ou boissons selon la revendication 19, dans lequel ladite étape de mise à disposition comprend le façonnage d'un récipient ou d'un manchon pour aliments ou boissons à partir d'une matière première pour récipient isolé selon l'une quelconque des revendications 12 à 18.
